# EUROPEAN PATENT SPECIFICATION

(11) **EP 0 248 262 B1**
(45) Date of publication and mention of the grant of the patent: **01.09.1993**
(21) Application number: 87107234.4
(22) Date of filing: 19.05.1987
(51) Int. Cl.: G06K 9/34

(54) **Apparatus and method for detecting character components on a printed document**
Gerät und Verfahren zur Ermittlung von Zeichenteilen auf einem gedruckten Dokument
Appareil et méthode de détection de composants de caractères sur un document imprimé

(30) Priority: 29.05.1986 JP 122414/86
(43) Date of publication of application: 09.12.1987
(73) Proprietor: International Business Machines Corporation, Armonk, N.Y. 10504 (US)
(72) Inventor: Katoh, Shin 703-goh NK Shibuya Quarters, Meguro-ku Tokyo-to (JP); Takahashi, Hiroyasu 303-goh 7-gohtoh Higashidanci, Midori-ku Yokohama-shi Kanagawa-ken (JP)
(74) Representative: Burt, Roger James, Dr.

(56) References cited:
- EP-A- 0 014 758
- IBM TECHNICAL DISCLOSURE BULLETIN, vol. 13, no. 2, July 1970, pages 351-352, New York, US; J.E. CARRINGTON et al.: "Line finding by profile analysis"
- E UND M, vol. 93, no. 2, February 1976, pages 72-76; G. MEYER-BRÖTZ et al.: "Probleme der Mustererkennung bei der automatischen Briefverteilung"

## Description

The present invention relates to an apparatus and a method for detecting characters and character lines on a printed document from a data stream resulting from scanning the document.

Optical Character Recognition (OCR) systems for reading printed characters are intended to read a large amount of machine-printed characters. However, unlike documents with hand-written characters, documents with machine-printed characters do not have the characters printed accurately within character frames printed with a particular dropout ink colour so that the frames are not detected by the OCR system. In documents with printed characters the characters have been printed according to the character pitches established uniquely by printers. Further, documents to be read out by OCR systems include not only originally printed high-quality documents, but also copies of such original documents. In such copy documents, since it is not possible to avoid noise components being included in the printed areas, it is necessary to detect only the effective character portions, which have not been affected by noise, from images in data streams derived by scanning the documents.

In reading characters with OCR systems, besides the problem of noise as stated above, there also exists the problem of document skewing. For example, in a document-feed-type scanner, skewing may be caused when a document is fed, and in a flat-bed-type scanner, a document placed on a reading platen may be skewed. Further, in case of a copy document, the document may have been copied with skewing.

Generally, conventional OCR systems employ a method of first segmenting a data stream representing a line of character areas to define character areas and then segmenting each character area from the established line of character areas by projection or the like. However, if the document is skewed and the character line is not parallel to the projecting direction, the first segmentation of the character line would be difficult. This problem could be resolved by a technique of dividing a character line into several blocks and projecting each of the blocks, as described in Japanese Published Unexamined Patent Application Nos. 58-106,665; 58-123,169; and 58-146,973; and an article by J. Kim, "BASELINE DRIFT CORRECTION OF HANDWRITTEN TEXT," IBM Technical Disclosure Bulletin, Vol. 25, No. 10, March 1983, pp.5111-5114.

However, the above mentioned documents do not described in detail how black portions, i.e., character components, are detected. Generally, a method of determining that a character component has been detected even when a pattern includes only one black dot would be inadequate since it would be too sensitive to noise. On the other hand, another known method often used in image processing, which employs a mask of 3 x 3 dots or so and determines that a character component has been detected when the number of black dots existing within the mask is more than a predetermined value, would require special circuits to implement it, or its processing speed would be reduced when the equivalent functions are to be implemented with software, since it would require bit manipulations.

In segmenting each character from a data stream representing an established character line, the problem of document skewing is not so large. However, for example, in the case of a laterally printed document, wherein characters are more narrowly spaced from each other than are the character lines, a forced segmentation should be made to avoid any connection between two adjacent characters due to noise existing therebetween. US-A-3,629,826 discloses a method for separating such adjacent characters connected with or touching each other. According to this method, parameters representing leading stroke edges and lagging stroke edges are detected from quantised video information representing characters, and these are weighted. Then, gating signals for separating adjacent characters are generated based on the differences between the weighted parameters. The method requires quite complicated hardware and software. Therefore, it is desirable to derive a simpler method for segmenting characters.

It has been a common practice in segmenting data streams representing an image of characters and character lines to determine the spaces between character lines and the spaces between characters by preparing histograms of black dots and comparing them with predetermined threshold values. However, to prepare the histograms, it is necessary to add the numbers of black dots for the entire quantised image. This would generally impose a large overhead on a microprocessor. Therefore, unless any dedicated circuit is provided therefore, the processing speed of performing all the segmentations would be reduced, and, even if any dedicated circuit is provided therefore, it would further add to the cost.

The object of the present invention is to provide an improved apparatus and method for detecting character components on a printed document.

The present invention relates to apparatus for detecting character components on a printed document of the type which comprises means for scanning over the document and generating a character data steam, segmentation means for detecting the boundaries between adjacent character components in the data steam by performing segmentation operations on the data stream, and recognition means using the results of the segmentation operations to detect character components in the character data stream.

According to the invention the apparatus is characterised in that the segmentation means comprises
means for dividing each part of said data stream which corresponds to the scanning of a selected one-dimensional area of said document into a plurality of p adjacent groups of bits so that each group contains the same number j of bits,
means for performing OR operations on all the bits in each of said groups so as to generate a pattern containing m bits, where m is an integer greater than one, and where each i-th bit in the pattern corresponds to the result of an OR operation performed between the bits i, i+m, i+2m ... i+(pj-m) of the one-dimensional area, i.e. every m-th bit starting from the i-th bit, where 0≦i<m;
means for counting the number of bits in the pattern which represent the presence of a character component,
summing means for summing the counts for a number of patterns corresponding to a preselected number of adjacent areas of said document, and
means for detecting from the results of said summing operations which scanned areas represent the boundaries between adjacent character components on said document.

The invention also relates to a method of detecting character components on a printed document of the type which comprises scanning over the document and generating a character data steam, detecting the boundaries between adjacent character components in the data steam by performing segmentation operations on the data steam, and using the results of the segmentation operations to detect character components in the character data steam.

According to the invention the method is characterised in that the segmentation operation comprises
dividing each part of said data stream which corresponds to the scanning of a selected one-dimensional area of said document into a plurality of p adjacent groups of bits so that each group contains the same number j of bits,
performing OR operations on all the bits in each of said groups so as to generate a pattern containing m bits, where m is an integer greater than one, and where each i-th bit in the pattern corresponds to the result of an OR operation performed between the bits i, i+m, i+2m ... i+(pj-m) of the one-dimensional area, i.e. every m-th bit starting from the i-th bit, where 0≦i<m;
counting the number of bits in the pattern which represent the presence of a character component,
summing the counts for a number of patterns corresponding to a preselected number of adjacent areas of said document, and detecting from the results of said summing operations which scanned areas represent the boundaries between adjacent character components on said document.

In order that the invention may be more readily understood an embodiment will now be described with reference to the accompanying drawings, in which
Fig 1 is a flow chart of a method of determining character components in a data stream according to the present invention,
Fig 2 illustrates a character recognition apparatus which can perform the method illustrated in Figure 1,
Fig 3 illustrates a technique of blocking to be employed in the method illustrated in Figure 1 when a document is skewed,
Fig 4 illustrates the OR operations for segmenting character lines employed in the method illustrated in Figure 1,
Fig 5 illustrates how a line component is established from the results of the OR operation illustrated in Figure 4, and
Fig 6 illustrates how a character component is established from the results of the OR operation illustrated in Figure 4.

In the following description of an embodiment of an apparatus and a method according to the present invention, it is assumed that a laterally printed document is scanned so that the direction of character lines and the primary scanning direction of the scanner are the same. Further, the embodiments employ a blocking technique similar to that used in the above mentioned prior art, to deal with slanting character lines. However, it should be understood that an apparatus and method according to the present invention may also be applied in the same way to cases where a vertically printed document is scanned or no blocking technique is employed. The document printed with characters to be used with the apparatus and method according to the invention may be either a machine-printed one or a hand-written one.

In principle, a method according to the present invention is similar to a conventional method wherein an m x n mask is shifted dot by dot laterally and vertically relative to an image of a printed document and black dots detected within the mask are counted. It is determined that an effective black component of a character has been detected when the count value is equal to or greater than a predetermined value. However, such a conventional method must utilise the mask for all the dots, while a method according to the present invention can attain an efficiency equivalent to that which could be attained by shifting a mask of m x n dots and yet attain an accuracy in segmenting a data stream into character components which is substantially the same as that which could be attained by shifting the mask dot by dot.

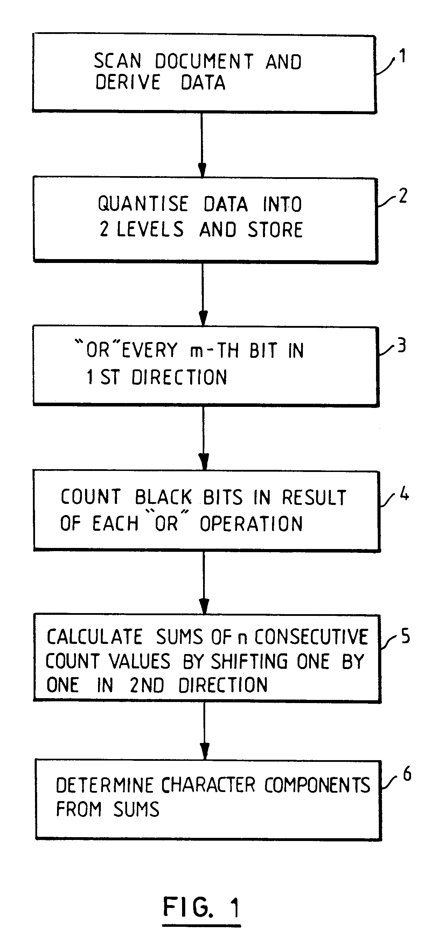

Fig. 1 shows a flow chart of a method for segmenting a data stream into character components according to the present invention. Step 1 of scanning a document with a scanner to derive a character data stream and Step 2 of quantising the data stream into two levels (representing each pixel with one bit) and storing the quantised data stream in a storage are well known techniques and, therefore, need not be explained in particular.

In Step 3, a plurality of groups are generated by sequentially selecting every m-th bit in the quantised data stream in a first direction of the image of the scanned document, i.e., in the segmenting direction which is parallel to the projecting direction. For example in the case of segmenting the data stream to derive a lateral character line, this may be accomplished by dividing each of the scanning lines represented in the quantised data stream into a plurality of groups along the primary scanning direction (lateral direction). Then the corresponding bits of these groups in each of the scanning lines are ORed together. As will be explained later, the OR operations may be performed more efficiently depending upon the architecture of a processor.

The number of OR groups generated as the result of the OR operations in Step 3 is equal to the number of bits along a second direction of the quantised data stream, i.e., the direction perpendicular to the segmenting direction. In Step 4, black bits (e.g., binary '1') in each of these OR groups are counted. These count values are arranged along the second direction.

In Step 5, the sums of n consecutive count values of block bits are sequentially calculated by shifting one by one the black-bit count values along the second direction. More specifically, first, the sum of the first through n-th count values along the second direction is calculated, and next, the sum of the second through (n + 1)-th count values is calculated, and further operations are performed in the same way until the sum of the i-th through (n + i - 1)-th count values is finally calculated. The Step 5 is performed in order to discriminate effective character components from noise, as will be explained later in more detail.

In the final Step 6, character components are determined by comparing each of the sums with a predetermined threshold value. Each of the values m and n is an integer equal to or greater than two. They may be varied according to the resolution of a scanner or the unit of processing being used. Generally, they would be sufficient to be three or four as in the case of a conventional mask.

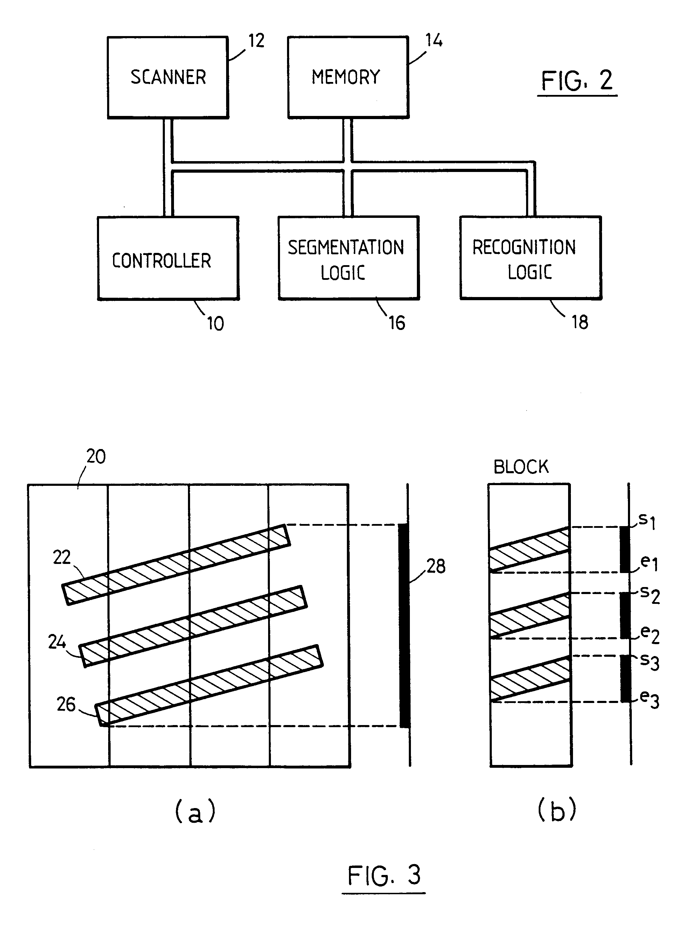

The above described segmentation method can be implemented in a character recognition apparatus such as illustrated in Fig. 2. The apparatus comprises a controller 10 which controls the apparatus, a scanner 12 which scans a machine-printed or hand-written document to generate a data stream and quantises the bits in the data stream into two levels, a memory 14 into which the quantised data stream from the scanner is stored, a segmentation logic 16 which scans the quantised data stream and segments the data stream into character areas, and a recognition logic 18 which recognises characters within the segmented data stream areas. The controller 10 may be a 16-bit microprocessor such as an Intel 8086, for example. The elements other than the segmentation logic 16 may readily be implemented by conventional units. After storing the quantised data stream derived from the scanner 12 into the memory 14, the controller 10 activates the segmentation logic 16 to segment the quantised data stream to detect character lines and characters. In the present embodiment, a 16-bit microprocessor is employed, and, therefore, the reading and writing operations out of and into the memory 14 are performed with a unit of a 16-bit word.

The operation of segmenting the quantised data stream in order to detect character lines and characters which is performed by the segmentation logic 16 under the control of the controller 10 will now be described.

### Detection of Character Lines by Segmentation

The operation of segmenting the data stream in order to detect character lines is an operation of extracting each character line separately out of a quantised data stream generated by the scanner 12. However, if a document includes many character lines and has been skewed when it is read by the scanner 12, the quantised data stream will be stored in the memory 14 in the skewed condition thus representing a skewed image of the document. When it is desired to detect each character line by laterally projecting such an image, it would be difficult to detect each character line because several adjacent character components would overlap with each other.

This is illustrated in Fig. 3 (a), in which character lines 22, 24, and 26 are skewed in an image 20 stored in the memory 14. With this arrangement the portion shown with a solid line 28 on the right side will be detected as one character line. However, as already stated with reference to the prior art, by equally dividing the image 20 into a plurality of (four, in case of the example illustrated in Fig.3 (a)) blocks in the direction perpendicular to the projecting direction (lateral direction) and projecting each of the blocks separately, it is possible to extract each of the character line components successfully, as illustrated in Fig. 3 (b).

In the apparatus being described, such a blocking technique is employed. In the example illustrated in Fig. 3 (a), assuming that the image 20 has a width of 1728 bits (108 words), each block has a width of 432 bits (27 words). Of course, such a blocking technique need not be employed when the problem of document skewing is not significant.

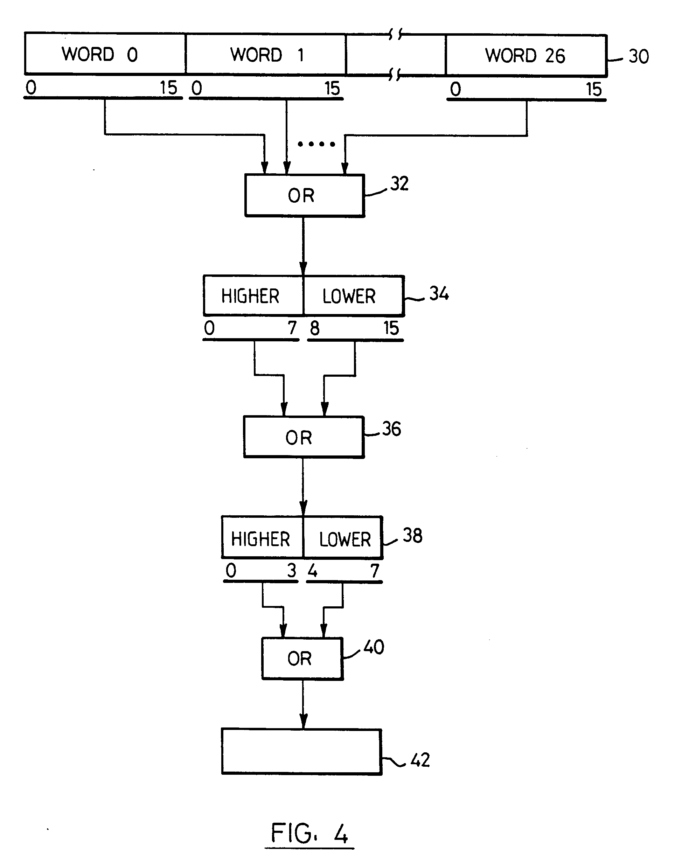

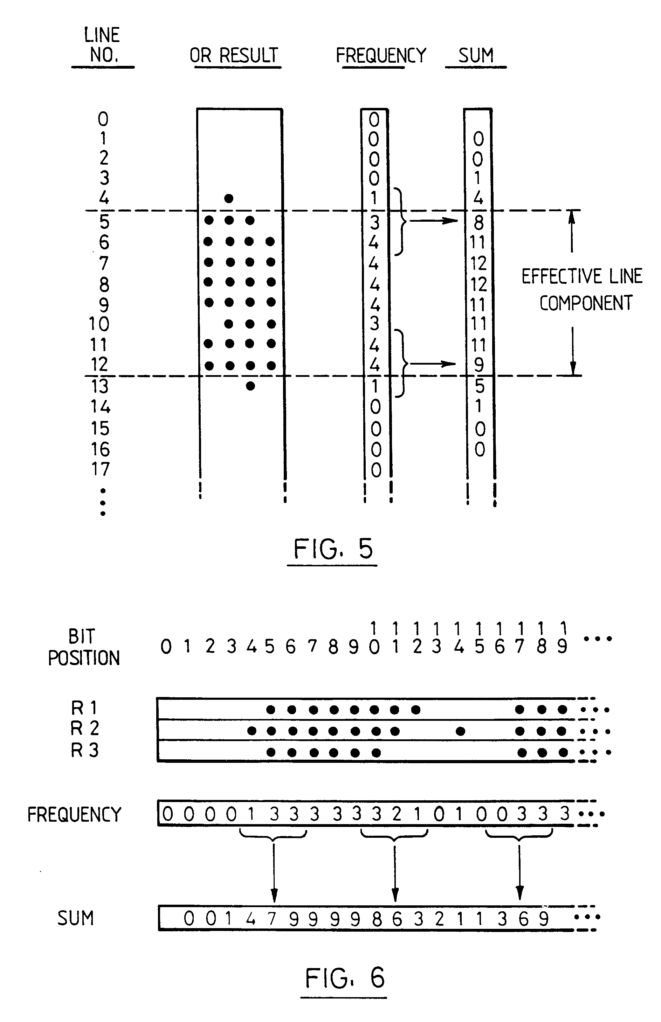

The quantised data stream generated by the scanner 12 is stored into the memory 14 sequentially word by word along the primary scanning direction of the scanner 12, and, when the data representing one line (108 words in case of the above example) has been stored therein, data representing the next line, proceeding in the secondary scanning direction, is stored therein. When the entire quantised data stream has been stored completely, the segmentation logic 16 performs the segmentation of the data stream in order to detect the character lines in each of the blocks according to the above-stated principle. This is illustrated in Figs. 4 and 5.

In Fig. 4, data 30 in a particular line in one block such as shown in Fig. 3 (b) comprise 27 words (432 bits), in this embodiment. The width of the block is preferably an integral multiple of the width of a bus (16 bits in this case) of the microprocessor utilised in the apparatus, and, if otherwise, unnecessary bits need be masked. Heretofore, all the black bits in the line have been calculated, as stated before. This is inefficient for a microprocessor. Instead of that, according to the present invention, corresponding bits (every fourth bit in case of the example illustrated in Fig. 4 ) in the groups are ORed. In this case, however, it would not be proper to OR every fourth bit in the line data with a 16-bit microprocessor. Therefore, in the example illustrated in Fig. 4, a first OR operation 32 is performed word by word, and a next OR operation 36 is performed by dividing an OR result 34 into the higher byte and the lower byte, and a final OR operation 40 is performed by dividing an OR result 38 of one byte into the higher nibble (part of a byte) and the lower nibble (part of a byte) in the same way. Thus, an OR pattern 42 finally converged into 4 bits is obtained. Although the same result could be obtained by dividing the line data 30 into 4-bit groups and ORing corresponding bits in each of them, the method illustrated in Fig. 4 would be more efficient. Generally, the method illustrated in Fig. 4 can be performed when ${\text{m = M/2}}^{\text{p}}$ 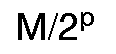 (p is an integer), assuming that the unit of processing or the width of a bus is M bits. In other words, m can be selected to be so.

The OR operations 32, 36, and 40 can be implemented by an OR instruction in a microprocessor. In the first OR operation 32, the first operand may be supplied to be a particular general purpose register (initialised to all zero) and the second operand may be the addresses of the words 0 - 26 in the memory 14, and the results may be written back into the general purpose register holding the first operand. Then, the OR result 34 of one word is obtained by accessing the memory 14 twenty-seven times. If the general purpose register can be accessed byte by byte, the OR result 34 of one word can easily be divided into the higher byte and the lower byte for ORing each of them. If the general purpose register cannot be accessed byte by byte, it will be necessary to divide the OR result 34 into the higher byte and the lower byte utilising a SHIFT instruction. The same may be said as to the case of obtaining the OR result 42 of four bits from the OR result 38 of one byte.

The operations illustrated in Fig. 4 are repeated for all the character lines in the data stream. The resulting 4-bit patterns, as illustrated in the column headed "OR result" in Fig. 5, are obtained. By counting, directly or referring to a table, the number of black bits in each of the 4-bit patterns, the frequency of occurrence of black bits in the range of 0 - 4 is obtained. Next, an explanation will be made as to the concept of a method for detecting effective line components from the obtained frequencies of occurrence of black bits.

The shaded portions 22, 24, and 26 illustrated in Fig. 3 are the portions to be segmented into characters as character lines. These portions should naturally include a sufficient number of consecutive black bits. Therefore, it is estimated that the bit patterns derived from the horizontal scanning lines which transverse these portions would have the frequency of occurrence of black bits of 4, and also that the bit patterns derived from the vertical scanning lines would have the frequency of occurrence of black bits of 4. On the other hand, in case of noise, which would occur sporadically, it is hardly likely that several bit patterns derived from consecutive scanning lines covering such noise would have the frequency of occurrence of black bits of 4.

Accordingly, by considering vertically the frequency distribution shown in the column headed "Frequency" in Fig. 5 and obtaining the sum of such frequencies in an area, it is possible to discriminate effective character components from noise. More specifically, assuming that an area involved has a height n, the frequency values of n adjacent scanning lines are summed, and this operation is repeated by shifting the scanning lines one by one. As the result, a series of sums as shown in the column headed "Sum" in Fig. 5 are obtained for the respective sets of lines. In the example illustrated in Fig. 5, n = 3. The sum of the frequencies for the bit patterns relating to a set of lines can be obtained by adding the frequency value of the bit patterns of the middle line to the frequency values of the bit patterns of the upper and lower lines adjacent thereto. However, in case of a line 0 having no upper line, such an addition cannot be performed and the "Sum" column for the line 0 is shown with a blank (so with the bottom line). In such a case, if a virtual line having a bit pattern frequency of 0 is established, it would be possible to perform such an addition.

The sums range from 0 to 12. The areas of the document containing effective character line components can be detected by comparing these sums with a predetermined threshold value. In the case being described, when the sum for a line is equal to or greater than the threshold value, it is determined that the line has black components which constitute line components, and when the sum for the line is smaller than the threshold value, it is determined that the line does not have such black components. Further, when the "Sum" column is sequentially inspected from the top, the number of a scanning line for which the sum has just changed from a value smaller than the threshold value into a value equal to or greater than the threshold value is registered as a character area starting point sᵢ, and the number of a scanning line for which the sum is about to change from a value equal to or greater than the threshold value into a value smaller than the threshold value is registered as a character area ending point eᵢ (see Fig. 3 (b)). In the example illustrated in Fig. 5, the threshold value is 7 and the line numbers 5 and 12 are registered as the character area starting point and the character area ending point, respectively. The number of lines (8 in this case) from the starting point to the ending point indicates the height of an effective line component. (Actually, the height is much larger.)

The example illustrated in Figs. 4 and 5, wherein m = 4, n = 3, and the threshold value = 7, has substantially the same effect as in the case of the conventional method wherein an entire quantised data stream representing a scanned document is scanned with a 3 x 4 mask and black components are detected by counting the number of black dots occurring within the mask, and yet has the advantage that high speed processing is possible without requiring any dedicated hardware. The values of m and n and of the threshold value may be selected as desired according to the size of the font used in the printing on the document, the resolution of the scanner, the architecture of the microprocessor, etc. Each of the values of m and n is an integer equal to or greater than two, although it would generally be sufficient to be three or four. It is desired that the threshold value is greater than a value (6 in the above example) at the middle of the range of the sums of the frequencies. The reason why m has been selected to be four rather than three in the above example is that the unit of processing is desired to be a power of two in a microprocessor, although m may be three if there is no such restriction.

Further, when a scanner having a high resolution, of the order of 16 dots/mm is used, the sampling in the secondary scanning direction (vertical direction) may be performed every other scanning line. The reasons therefor are that it would be enough to perform the sampling every other scanning line since effective black components other than noise always extend over at least two scanning lines at such a high resolution, and that the advantage of the high speed processing according to the present invention would be lost by performing the sampling every scanning line, since the amount of segmentation data would be increased thereby.

Although the segmentation of a data stream with character components, i.e., character line components, according to the method illustrated in Figs. 4 and 5 is satisfactorily accurate, the segmentation could be performed even more accurately by employing line pitch information and font size information provided by a system or a user in the event that the original document is a machine-printed one. For example, in Fig. 3 (b), if (e₁ - s₁) is within a predetermined range with respect to a font size (height), e.g., 0.8 to 1.2 times the font size, the portion bounded by s₁ and e₁ (shown with a thick line) can be established as a first line component. Next, estimating the point where one line pitch is added to the coordinates of the centre of the first line component to be the coordinates of the centre of the second line component, and examining an area within the range of the order of 0.6 times the height of the font, for example, on the upper and lower sides of the estimated centre of the second line component, if the portion bounded by sᵢ and eᵢ (i = 2, 3, ...) overlaps the area and, at the same time, (eᵢ - sᵢ) is within the range of 0.8 to 1.2 times the height of the font, the portion bounded by sᵢ and eᵢ can be established as the second line component. Thereafter, similar calculations are repeated until the last line component has been established. In the case when a quantised data stream is divided into a plurality of blocks, the same calculations are made for each of the blocks.

If (eᵢ - sᵢ) is greater than 1.2 times the height of the font, the block is to be subdivided further and the method illustrated in Figs. 4 and 5 is to be performed again. If (eᵢ - sᵢ) is smaller than 0.8 times the height of the font, the differences between eᵢ₊₁, eᵢ₊₂, etc., and sᵢ are examined, and, when (eᵢ₊ⱼ - sᵢ) is within the above range, the portion bounded by sᵢ and eᵢ₊ⱼ is established as one line component. If the first line component could not be established, first the second line component is to be detected by estimating the point where one line pitch is added to a point which is estimated as a part of the line component, to be the centre of the second line component, and then the area where the first line component exists is to be calculated.

### Detection of Characters by Segmentation

Theoretically, by rotating through 90~ each character line component detected by the method of segmentation of the data stream illustrated in Figs. 4 and 5 and applying the method of segmentation illustrated in Figs. 4 and 5 to the corresponding portion of the data stream, a single character area could be detected separately. However, rotating an image of a character line utilising an ordinary microprocessor would impose a large overhead to the microprocessor and reading of a quantised data stream stored in the memory 14 also in the vertical direction would require complicated access circuits. Therefore, a method of segmentation in order to detect characters which can be easily performed with an ordinary microprocessor will be explained below.

As explained above, the method of segmentation according to the present invention is based on ORing the bits in a series of groups formed by selecting every m-th bit along the segmenting direction, i.e., the projecting direction. Accordingly, in segmenting characters, corresponding bits in selected scanning lines constitute one group. In the present embodiment, instead of reading such a group by one access from the memory 14 and ORing the group with each of the other groups, m registers each having the same length as that of a previously segmented character line component are provided or virtual areas for such registers are provided in the memory, and the result of ORing corresponding bits in every m-th scanning line is stored therein. Then, finally, each group of m corresponding bits in the m registers would include the OR result as explained with respect to the principle of the present invention. For example, assuming that the i-th to k-th scanning lines have been detected as an effective line component according the the method illustrated in Figs. 4 and 5, the following OR results would be stored in the m registers R₁ - Rₘ.

$\text{R₁ = [ i ] + [ i + m ] + [ i + 2m ] + ... + [ i + k₁m ] ( i + k₁m ≦ k )}$
$\text{R₂ = [ i + 1 ] + [ i + 1 + m ] + ... + [ i + 1 + k₂m ] ( i + 1 + k₂m ≦ k )}$
${\text{R}}_{\text{m}} {\text{= [i + m - 1] + [i + m - 1 + m] + ... + [i + m - 1 + k}}_{\text{m}} {\text{m] ( i + m - 1 + k}}_{\text{m}} \text{m ≦ k )}$

In the above formulae, each bracket [ ] represents the data of a scanning line having a number indicated therein (the length is the same as that of a selected effective line component), and " + " represents the OR operation for each bit. These OR operations may easily be performed by employing the OR instruction with the first operand supplied to each of the registers R₁ - Rₘ, and the second operand being the scanning line data, and the results stored into the first operand register. In the case when the length of a detected line component is more than one word (16 bits), the above operations are required to be performed for each word. Thereafter, as in the case of detecting character lines, the number of black dots in the OR operation result along the segmenting direction (in this case, the secondary scanning direction) is counted and the frequency distribution in the direction perpendicular to the segmenting direction, i.e. the primary scanning direction, is obtained, and then the sums of n consecutive frequency values are calculated by shifting the frequency values one by one. When a sum of the frequency values is equal to or greater than a predetermined threshold value, the portion corresponding thereto is established as an area where a character component exists.

The values of m and n may generally be selected to be three since each of the effective character components other than noise generally includes at least three consecutive dots, although it depends upon the resolution of the scanner and the size of the font used. In that case, the sums of the frequency values would range from 0 to 9, and, accordingly, a threshold value may be selected to be five which is greater than the middle value. This has substantially the same effect as in the conventional method wherein an entire quantised data stream representing an image is scanned dot by dot with a 3 × 3 mask.

Fig. 6 illustrates an example of detecting characters by the segmentation operation described with each of the values m and n made to be three. The example illustrated in Fig. 6 corresponds to the example illustrated in Fig. 5 except that it is rotated through 90° and the OR operation result consists of three bits. In the example illustrated in Fig. 6, it is established that the bit positions 5 - 11, 17, 18, etc., include effective character components.

Next, an explanation will be made as to a method of detecting each character by employing pitch information and font size information (width) provided by a system or a user. First, the sums shown in Fig. 6 are checked sequentially from left to right as to whether or not each of them is equal to or greater than the threshold value. If the length of consecutive positions each having the sum equal to or greater than the threshold value is within the range of 0.8 to 1.2 times the width W of the font, for example, the positions are established as a first character area. With the coordinates of the centre of an established character area in the X direction (the secondary scanning direction) denoted as X₁ and a character pitch denoted as P, the coordinates of the centre X₂ of the next character area in the X direction may be expressed as follows.

$\text{X₂ = X₁ + P}$

Accordingly, when a position having a sum of frequency values smaller than the threshold value (preferably, a position having the sum of the frequency values of zero) is detected within the following range,

$\text{X₂ + ( P / 2 ) ± ( P - W ) / 2}$

the position can be established to be the right edge of the estimated character frame of the next character. If such a position cannot be detected within the above range, it is considered that two adjacent characters touch each other. In such a case, a position at which the frequency distribution is the minimum within the estimated range can be selected as the point for segmentation. The left edge can be obtained in the same way. When the right and left edges of the estimated character frame have been determined (the upper and lower edges of a line area including the character have already been obtained at the time of segmenting the character line), the upper and lower edges of the character are detected by performing a lateral projection again within the range, to establish a rectangle circumscribed about the character. The coordinate of the centre of the circumscribed rectangle in the X direction is newly defined to be X2. By further repeating the same segmentation operation, each of the characters in each character line can be detected.

## Claims

1. Apparatus for detecting character components on a printed document comprising means (12) for scanning over said document and generating a character data stream, segmentation means (16) for detecting the boundaries between adjacent character components in said data stream by performing segmentation operations on said data stream, and recognition means (18) using the results of said segmentation to detect character components in said character data stream,
characterised in that said segmentation means (16) comprises
means for dividing each part of said data stream which corresponds to the scanning of a selected one-dimensional area of said document into a plurality of p adjacent groups of bits so that each group contains the same number j of bits,
means for performing OR operations on all the bits in each of said groups so as to generate a pattern containing m bits, where m is an integer greater than one, and where each i-th bit in the pattern corresponds to the result of an OR operation performed between the bits i, i+m, i+2m ... i+(pj-m) of the one-dimensional area, i.e. every m-th bit starting from the i-th bit, where 0≦i<m;
means for counting the number of bits in the pattern which represent the presence of a character component,
summing means for summing the counts for a number of patterns corresponding to a preselected number of adjacent areas of said document, and
means for detecting from the results of said summing operations which scanned areas represent the boundaries between adjacent character components on said document.

2. Apparatus as claimed in claim 1 characterised in that said means for performing OR operations on all the bits in each group performs said operations in stages, operating on sub-sets of said bits in each stage.

3. Apparatus as claimed in either of the preceding claims characterised in that said summing means sums the counts for the patterns corresponding to the scanning of a preselected number of adjacent lines extending parallel to the direction of scanning.

4. Apparatus as claimed in either claim 1 or claim 2 characterised in that said summing means sums the counts for the patterns corresponding to the scanning of a preselected number of adjacent lines extending perpendicular to the direction of scanning.

5. A method of detecting character components on a printed document comprising scanning over said document and generating a character data stream, detecting the boundaries between adjacent character components in said data stream by performing segmentation operations on said data stream, and using the results of said segmentation operations to detect character components in said character data stream,
characterised in that said segmentation operation comprises
dividing each part of said data stream which corresponds to the scanning of a selected one-dimensional area of said document into a plurality of p adjacent groups of bits so that each group contains the same number j of bits,
performing OR operations on all the bits in each of said groups so as to generate a pattern containing m bits, where m is an integer greater than one, and where each i-th bit in the pattern corresponds to the result of an OR operation performed between the bits i, i+m, i+2m ... i+(pj-m) of the one-dimensional area, i.e. every m-th bit starting from the i-th bit, where 0≦i<m;
counting the number of bits in the pattern which represent the presence of a character component,
summing the counts for a number of patterns corresponding to a preselected number of adjacent areas of said document, and detecting from the results of said summing operations which scanned areas represent the boundaries between adjacent character components on said document.

6. A method as claimed in claim 5 characterised in that, in said step of performing OR operations on all the bits in each group, said operations are performed in stages, operating on sub-sets of said bits in each stage.

7. A method as claimed in either claim 5 or claim 6 characterised in that, in said summing operation, the counts for the patterns corresponding to the scanning of a preselected number of adjacent lines extending parallel to the direction of scanning are summed.

8. A method as claimed in either claim 5 or claim 6 characterised in that, in said summing operation, the counts for the patterns corresponding to the scanning of a preselected number of adjacent lines extending perpendicular to the direction of scanning are summed.

## Patentansprüche

1. Gerät zur Ermittlung von Zeichenteilen auf einem gedruckten Dokument mit Mitteln (12) zum Abtasten des Dokuments und zum Erzeugen eines Datenstroms, Segmentierungsmitteln (16) zur Ermittlung der Grenzen zwischen den aneinandergrenzenden Zeichenteilen in dem Datenstrom mittels Durchführung von Segmentierungsoperationen in dem Datenstrom und Erkennungsmitteln (18), die die Ergebnisse der Segmentierung zur Ermittlung der Zeichenteile in dem Zeichendatenstrom verwenden,
dadurch gekennzeichnet, daß die Segmentierungsmittel (16) mit
Mitteln zur Trennung jedes Teils des Datenstroms, der der Abtastung eines ausgewählten, eindimensionalen Bereichs des Dokuments in einer Vielzahl von p aneinandergrenzenden Bitgruppen entspricht, so daß jede Gruppe die gleiche Anzahl j von Bits enthält,
Mitteln zur Durchführung von ODER-Operationen in allen Bits in jeder der Gruppen, um so ein Muster zu erzeugen, das m Bits enthält, wobei m eine Ganzzahl größer als eins ist und wo jedes i-th Bit in dem Muster dem Ergebnis einer ODER-Operation entspricht, die zwischen den Bits i, i+m, i+2m ... (i+(pj-m) des eindimensionalen Bereichs, d.h. jedem m-th Bit ausgehend von dem i-th Bit durchgeführt wurde, wobei 0≦i<m ist;
Mittel zum Zählen der Anzahl von Bits in dem Muster, das das Vorhandensein von einem Zeichenteil repräsentiert,
Summenmittel zum Summieren der Zählungen für eine Anzahl von Mustern, die einer zuvor ausgewählten Anzahl von aneinandergrenzenden Bereichen des Dokuments entsprechen, und
Mittel zur Ermittlung der Ergebnisse aus den Summenoperationen enthalten, in denen die abgetasteten Bereiche die Grenzen zwischen aneinandergrenzenden Zeichenteile auf dem Beleg repräsentieren.

2. Gerät wie in Anspruch 1 dadurch gekennzeichnet, daß die Mittel zur Durchführung der ODER-Operationen auf allen Bits in jeder Gruppe die Operationen in Stufen durchführen, die als Teilmengen der Bits in jeder Stufe operieren.

3. Gerät wie in irgendeinem der vorhergehenden Ansprüche dadurch gekennzeichnet, daß die Summenmittel die Zählungen für Muster entsprechend der Abtastung einer zuvor ausgewählten Anzahl von aneinandergrenzenden Zeilen summieren, die parallel zu der Abtastrichtung verlaufen.

4. Gerät wie in irgendeinem der Ansprüche 1 oder 2 dadurch gekennzeichnet, daß die Summenmittel die Zählungen für die Muster entsprechend der Abtastung einer zuvor ausgewählten Anzahl von aneinandergrenzenden Zeilen summieren, die senkrecht zu der Abtastrichtung verlaufen.

5. Ein Verfahren zur Ermittlung von Zeichenteilen auf einem gedruckten Dokument, das das Abtasten des Dokuments und die Erzeugung eines Zeichendatenstroms enthält, die Er-mittlung der Grenzen zwischen aneinandergrenzenden Zeichenteilen in dem Datenstrom mittels Durchführung von Segmentierungsoperationen in dem Datenstrom enthält und die Ergebnisse der Segmentierungsoperationen verwendet, um die Zeichenteile in dem Zeichendatenstrom zu ermitteln,
dadurch gekennzeichnet, daß die Segmentierungsoperation
die Trennung jedes Teils des Datenstroms enthält, der der Abtastung eines ausgewählten, eindimensionalen Bereichs des Dokuments in einer Vielzahl von p aneinandergrenzenden Bitgruppen entspricht, so daß jede Gruppe die gleiche Anzahl j von Bits enthält,
die Durchführung von ODER-Operationen in allen Bits in jeder der Gruppen enthält, um so ein Muster zu erzeugen, das m Bits enthält, wobei m eine Ganzzahl größer als eins ist und wo jedes i-th Bit in dem Muster dem Ergebnis einer ODER-Operation entspricht, die zwischen den Bits i, i+m, i+2m ... (i+(pj-m) des eindimensionalen Bereichs, d.h. jedem m-th Bit ausgehend von dem i-th Bit durchgeführt wurde, wobei 0≦i<m ist;
das Zählen der Anzahl von Bits in dem Muster enthält, das das Vorhandensein von einem Zeichenteil repräsentiert,
das Summieren der Zählungen für eine Anzahl von Mustern enthält, die einer zuvor ausgewählten Anzahl von aneinandergrenzenden Bereichen des Dokuments entsprechen, und die Ermittlung der Ergebnisse aus den Summenoperationen enthalten, in denen die abgetasteten Bereiche die Grenzen zwischen aneinandergrenzenden Zeichenteile auf dem Beleg repräsentieren.

6. Ein Verfahren wie in Anspruch 5 dadurch gekennzeichnet, daß der Schritt zur Durchführung der ODER-Operationen auf allen Bits in jeder Gruppe die Operationen in Stufen durchführt, die als Teilmengen der Bits in jeder Stufe operieren.

7. Ein Verfahren wie in Anspruch 5 oder 6 dadurch gekennzeichnet, daß die Summenmittel die Zählungen für Muster entsprechend der Abtastung einer zuvor ausgewählten Anzahl von aneinandergrenzenden Zeilen summieren, die parallel zu der Abtastrichtung verlaufen.

8. Ein Verfahren wie in Anspruch 5 oder 6 dadurch gekennzeichnet, daß die Summenmittel die Zählungen für die Muster entsprechend der Abtastung einer zuvor ausgewählten Anzahl von aneinandergrenzenden Zeilen summieren, die senkrecht zu der Abtastrichtung verlaufen.

## Revendications

1. Appareil de détection de composants de caractères sur un document imprimé, comprenant des moyens (12) de balayage dudit document et de génération d'un train de données de caractères,des moyens de segmentation (16) pour détecter les limites entre des composants de caractères adjacents dans ledit train de données par exécution d'opérations de segmentation sur ledit train de données, et des moyens de reconnaissance (18) utilisant les résultats de ladite segmentation pour détecter des composants de caractères dans ledit train de données de caractères,
caractérisé en ce que lesdits moyens de segmentation (16) comprennent :
des moyens de division de chaque partie dudit train de données, qui correspond au balayage d'une région unidimensionnelle choisie dudit document, en une pluralité de p groupes adjacents de bits de sorte que chaque groupe contienne le même nombre j de bits,
des moyens d'exécution d'opérations OU sur tous les bits dans chacun desdits groupes de façon à engendrer une configuration contenant m bits, m étant un entier plus grand que 1, et chaque i-ième bit dans la configuration correspondant au résultat d'une opération OU effectuée entre les bits i, i+m, i+2m ... i+(pj-m) de la région unidimensionnelle, c'est-à-dire chaque m-ième bit à partir du i-ième bit, avec 0≦i<m ,
des moyens de comptage du nombre de bits dans la configuration qui représentent la présence d'un composant de caractère ,
des moyens de sommation pour additionner les comptes pour un nombre de configurations correspondant à un nombre prédéterminé de régions adjacentes dudit document, et
des moyens pour détecter, à partir des résultats desdites opérations d'addition, les régions balayées qui représentent les limites entre des composants de caractères adjacents sur ledit document.

2. Appareil suivant la revendication 1, caractérisé en ce que lesdits moyens d'exécution d'opérations OU sur tous les bits dans chaque groupe exécutent lesdites opérations de façon étagée et travaillent sur des sous-ensembles desdits bits à chaque étage.

3. Appareil suivant l'une quelconque des revendications précédentes, caractérisé en ce que les dits moyens de sommation additionnent les comptes pour les configurations correspondant au balayage d'un nombre prédéterminé de lignes adjacentes parallèles à la direction de balayage.

4. Appareil suivant la revendication 1 ou la revendication 2, caractérisé en ce que lesdits moyens de sommation additionnent les comptes pour les configurations correspondant au balayage d'un nombre prédéterminé de lignes adjacentes perpendiculaires à la direction de balayage.

5. Méthode de détection de composants de caractères sur un document imprimé, comprenant le balayage dudit document et la génération d'un train de données de caractères, la détection des limites entre des composants de caractères adjacents dans ledit train de données par exécution d'opérations de segmentation sur ledit train de données, et l'utilisation des résultats desdites opérations de segmentation pour détecter les composants de caractères dans ledit train de données de caractères,
caractérisée en ce que ladite opération de segmentation comprend :
la division de chaque partie dudit train de données qui correspond au balayage d'une région unidimensionnelle choisie dudit document en une pluralité de p groupes adjacents de bits de sorte que chaque groupe contienne le même nombre j de bits,
l'exécution d'opérations OU sur tous les bits dans chacun desdits groupes de façon à engendrer une configuration contenant m bits, où m est un entier plus grand que 1 et où chaque i-ième bit dans la configuration correspond au résultat d'une opération OU effectuée entre les bits i, i+m, i+2m, ... i+(pj-m) de la région unidimensionnelle, c'est-à-dire chaque m-ième bit à partir du i-ième bit, avec 0≦i<m ;
le comptage du nombre de bits dans la configuration qui représentent la présence d'un composant de caractère,
l'addition des comptes pour un nombre de configurations correspondant à un nombre prédéterminé de régions adjacentes du dit document, et
la détection, à partir des résultats desdites opérations d'addition, des régions balayées qui représentent les limites entre des composants de caractères adjacents sur ledit document.

6. Méthode suivant la revendication 5, caractérisée en ce que, dans ladite étape d'exécution d'opérations OU sur tous les bits de chaque groupe, les dites opérations sont exécutées de façon étagée, en travaillant sur des sous-ensembles desdits bits à chaque étage.

7. Méthode suivant la revendication 5 ou la revendication 6, caractérisée en ce que, dans ladite opération d'addition, les comptes pour les configurations correspondant au balayage d'un nombre prédéterminé de lignes adjacentes parallèles à la direction de balayage sont additionnés.

8. Méthode suivant l'une quelconque des revendications 5 ou 6, caractérisée en ce que, dans ladite opération d'addition, les comptes pour les configurations correspondant au balayage d'un nombre prédéterminé de lignes adjacentes perpendiculaires à la direction de balayage sont additionnés.
